# EUROPEAN PATENT APPLICATION

(11) **EP 4 538 226 A1**
(43) Date of publication of application: **16.04.2025**
(21) Application number: 23203478.5
(22) Date of filing: 13.10.2023
(51) Int. Cl.: C01B 3/32, C01B 3/38, H01M 8/0612

(54) **FUEL REFORMER DEVICE AND METHOD FOR REFORMING A RAW FUEL FOR A HIGH-TEMPERATURE FUEL CELL**

(71) Applicant: AVL List GmbH, 8020 Graz (AT)
(72) Inventor: Schluckner, Christoph, 8020 Graz (AT); Erharter, Lukas, 8020 Graz (AT); Balint, Andras, 6000 Kecskemét (HU); Neubauer, Raphael, 8020 Graz (AT); Lawlor, Vincent, 8020 Graz (AT); Reiter, Bernd, 8020 Graz (AT)
(74) Representative: Gamper, Bettina

(57) **Abstract**

The present invention relates to a fuel reformer device (10) and method for reforming a raw fuel to a reformate fuel gas to be fed into a high-temperature fuel cell (30). As an essential aspect of the invention, a steam reforming catalyst (12) contains copper and the fuel reformer device (10) comprises a separated two-stage structure (14) defining a steam reformer stage (11) and a methanation reactor stage (13) for thermal delimiting an upstream low temperature zone accommodating the steam reforming catalyst (12) against a downstream high temperature zone of the exothermic methanation reaction.

## Description

The present application relates to a fuel reformer device for reforming a raw fuel to a reformate fuel gas to be fed into a high-temperature fuel cell, a high-temperature fuel cell system comprising said fuel reformer device and a corresponding method for reforming a raw fuel to a reformate fuel gas to be fed into a high-temperature fuel cell.

The technique of the invention is preferably applied in the field of high-temperature fuel cells, embodied as a type of solid oxide fuel cells (SOFC). Due to efficiency advantages, SOFC-type fuel cells normally are used for large scale, stationary or semi-stationary applications. Such large scale applications usually allow for enough space, weight and complexity required by an elaborated structure of sub-systems in the periphery of such high-temperature fuel cell systems.

As an economical and logistical advantageous example for the periphery of large-scale high-temperature fuel cell systems, a steam reformer is provided as a sub-system upstream to the fuel cell stacks. The process of steam reforming raw fuels like natural gas, i.e. methane, or liquid methanol enables production of hydrogen and methane rich fuel gas just at the point of use and directly before consumption. As a result, an expensive supply chain from production to storage of correspondingly large amounts of grey hydrogen or blue hydrogen for a large-scale fuel system can be avoided by installing a readily available natural gas supply line or providing liquid supply of methanol.

Furthermore, it is recognized that an operation efficiency of SOFC-type fuel cells can be enhanced, if a content of methane (CH₄) in the reformate gas leaving the steam reformer as a product to be fed into the fuel cells, can be increased with respect to a remaining content of carbon monoxide (CO) or carbon dioxide (CO₂). For this purpose it is known to equip such reformer devices for the described field of application with a methanation reactor. In the methanation reaction, hydrogen (H₂) which is preferably separated by support of a steam reaction catalyst, is recombined with residual species of carbon oxides. In a known structure of the present technique used for such fuel reformer, these reactions occur along a path of a process stream passing an elongated high-temperature chamber of the fuel reformer.

However, the costs for the steam reaction catalyst are high due to the need for use of precious metals. In particular platinum group metals (PGM) are presently used for providing catalytical activity withstanding the elevated temperatures in the reactor chamber of the fuel reformer without degradation like oxidation. The provision of the steam reaction catalyst is otherwise essential for high hydrogen yields which is the underlying purpose of the fuel reformer. High temperatures occur in the methanation reaction being of exothermic nature and help to increase a temperature of the process stream passing the fuel reformer to be increased up to the high-temperature regime of a SOFC. Hence, economical industrial applications raise demand for cost improvements in fuel reformers for large scale SOFC systems.

### Summary of the Invention

It is an object of the invention to provide a fuel reforming technique overcoming the problem of high investment costs and preventing from dealing with critically ethical and social circumstances involved in the mining and supply chain of precious metals like PGM in amounts for large scale applications.

It is another object of the invention to provide a thermal design of a fuel reformer device enabling the use of a low cost steam reaction catalyst material.

The object is solved by a fuel reformer device having the features of claim 1 and a corresponding method for reforming raw fuel having the steps of claim 14. Further features and details of the invention result from the dependent claims, the specification, and the drawings. Features and details described in connection with the claimed fuel reformer device according to the invention also apply in context of the claimed high-temperature fuel cell system and the method for reforming raw fuel according to the invention, and vice versa, so that the individual aspects of the invention are or can always be mutually referred to in the disclosure.

The invention proposes a fuel reformer device for reforming a raw fuel to a reformate fuel gas to be fed into a high-temperature fuel cell. The fuel reformer device comprises a reformer inlet and a reformer outlet for entrance and exit of a process stream. The process stream starts in the beginning as a mixed process gas of steam and raw fuel prepared upstream to the fuel reformer device by another system component of a fuel cell system involving an evaporator unit and a mixing unit. The fuel reformer provides a steam reforming space in which an endothermic steam reforming reaction of the process gas occurs, for generating a product gas. A catalyst exposed to the process stream promotes the production of a hydrogen H2 rich and carbon monoxide CO poor reformed product gas. The fuel reformer device also provides a methanation reacting space in which an exothermic methanation reaction of the product gas occurs, for generating a fuel gas having an enriched concentration of methane CH₄.

In particular according to the invention, the fuel reformer device comprises a separated two-stage structure defining a steam reformer stage enclosing the steam reforming space and the steam reforming catalyst, as well as defining a methanation reactor stage enclosing the methanation reacting space. The separated two-stage structure provides for thermal delimiting, along the process stream, an upstream low temperature zone accommodating the steam reforming catalyst against a downstream high temperature zone of the exothermic methanation reaction. As a core aspect of the invention, a catalyst material of the steam reforming catalyst contains copper.

Moreover, the invention analogously proposes a method for reforming a raw fuel to a reformate fuel gas to be fed into a high temperature fuel cell. The method is preferably conducted by means of the above defined fuel reformer device according to the invention. The method for reforming a raw fuel comprises several following steps: A step of preparing a mixed process gas of steam and raw fuel. A step of supplying, e.g. by means of distribution of system heat collected from the fuel cell, thermal energy for performing an endothermic steam reforming reaction of the process gas, for generating a product gas having an enriched concentration of hydrogen H₂. A step of performing an exothermic methanation reaction of the product gas, for generating a fuel gas having an enriched concentration of methane CH₄.

In particular the method according to the invention includes an essential step of exposing a steam reforming catalyst containing copper in or downstream to a space of occurrence of the steam reforming reaction, under thermal delimitation to a space of occurrence of the exothermic methanation reaction. The method according to the invention also includes a step of controlling the supply of thermal energy in support of the endothermic steam reforming reaction depending on a local temperature at the steam reforming catalyst, in particular, further depending on a maximum of said local temperature of 300 °C. This method step serves for providing and maintaining a suitable, non-detrimental local temperature at the steam reforming catalyst in avoidance of a deterioration like oxidation of the copper in a low cost catalyst material.

In terms of this disclosure the following definitions and understanding underlies the above determined invention. The raw fuel is a kind of hydrocarbon fuel which can also be used for purposes of combustion in heating or power generation applications. The process stream indicates a flow of different gases to be processed while passing the fuel reformer device. The process gas is a mixture of steam and raw fuel, wherein the latter is present in any stage of an atomized or evaporated liquid or diffused gas while mixing with the fluid humid content of the steam. The product gas is a product of the steam reforming process containing a sufficient concentration of hydrogen to operate the electrochemical reaction in the high-temperature fuel cell for generating power. The fuel gas to be fed from the fuel reformer device into a fuel cell is a product of the methanation reaction and has a significant higher content of methane versus a content of carbon monoxide or carbon dioxide compared to the product gas.

A reformer stage in terms of the disclosure of the above determined invention is a unit or part of a unit for localization of processes along the process stream. A stage structure therefore includes structural features like a casing and or a piping for enclosing spaces and connections enabling and accommodating processes including active process steps, passive reactions, effects thereof and the like. Accordingly, a separated two-stage structure is a part of plant construction separating processes in two units or parts of a unit along the process stream which, in other words, avoids the occurrence of said processes at the same local space. The containment of copper in the catalyst material is defined to represent a significant content of copper for providing a sufficient concentration effecting catalytical activity of separation of hydrogen in purpose of the steam reforming catalyst.

Thus, for the first time, the invention enables the use of a low cost catalyst for the application of a steam reforming catalyst in the system and temperature regime of a high temperature fuel cells, in particular a SOFC.

In other words, for the first time, the invention uses and enables the use of a copper containing catalyst material at a reforming process stage for reforming methanol, as a preferred raw fuel, into a hydrogen H₂ rich synthesis gas of low carbon monoxide CO content upstream to a methanation process stage for producing a methane CH₄ rich fuel gas for the SOFC from hydrogen content in the synthesis gas. Since the high temperatures of methanation reaction are detrimental to non-PGM catalyst material the use of copper containing catalyst seemed to be unsuitable for application and arrangement in the high-temperature environment between said process stages of a SOFC system.

To this end, the invention provides a dedicated detail of plant construction to protect a local temperature at the steam reforming catalyst from processes exhibiting higher temperatures. The thermal protection of the copper containing catalyst material is achieved by a spatial separation of occurrence of the reforming reaction involving the purposeful exposition of the catalyst material from the occurrence of methanation reaction.

The thermal energy of the exothermal methanation reaction, which considered alone requires to be controlled in avoidance of thermal runaway, is normally used to directly support the energy need of the endothermal reforming reaction. Technical approaches of a combined reformer-reactor therefore strive to run a combined reaction of reforming reaction and methanation reaction directly energetically supporting each other resulting in converging processes along the process stream within a mutual chamber or stage allowing for direct exchange of thermal energy in between.

However, in the described known technique the occurrence of high methanation reaction temperatures close to the steam reforming catalyst affect local temperatures at the catalyst material exceeding by far the temperature resistance of copper containing catalyst materials. As a fact of material properties, copper is prone to be oxidized and deteriorated in a temperature range beyond 300 °C which is still below controlled reaction temperatures of the exothermic methanation reaction or the operation temperatures of a SOFC.

This is why considerations for a use of low cost catalyst materials using copper instead of PGMs as the active component of catalytical activity for steam reforming applications in the periphery of SOFC systems have been so far discarded.

As a first advantage, the technique according to the invention substantially reduces investment costs in plant construction of SOFC systems due to avoidance of PGMs in the catalyst material for steam reforming catalysts.

A second advantage, the technique according to the invention avoids the use of rare earths occurring to a limited extend as well as dealing in supply chains involving ethical and social critical circumstances as well as environmental pollution in the mining regions of third world countries.

Moreover, in a third advantage the technique according to the invention provides enhanced performance of SOFC systems due to an optimized methane CH₄ content set by the integrated methanation reactor in the fuel reformer device. As has been learnt, a lack of methane in SOFC applications leads to inferior system net efficiency while a high methane content increases overall system efficiency, since a high methane content is important to maximize a stack internal reforming while less cooling demand is required from the air side.

Furthermore, as a fourth advantage the technique according to the invention yet provides a compact plant construction for SOFC systems by the combined design of a steam reformer and a methanation reactor in one fuel reformer device.

Even more, in a fifth advantage, the technique according to the invention principally enables to individually control different temperature zones for both reactions by means of further features of the balance of plant (BoP) technique.

According to a preferred aspect, copper represents the main part of the catalyst material of the steam reforming catalyst.

According to an aspect of the invention, the separated two-stage structure defines a distance along the process stream between the steam reformer stage and the methanation reactor stage, for thermal delimitation by means of a thermally isolating distance.

According to another aspect of the invention, the separated two-stage structure defines a confinement in a flow cross-section of the process stream, for thermal delimitation by means of a barrier for preventing backflow from the downstream high temperature zone in the methanation reactor stage to the upstream low temperature zone in the steam reformer stage.

In preferred aspect of the invention the steam reforming catalyst is formed as a membrane for supporting separation of the hydrogen in the product gas.

In an advantageous embodiment the steam reformer stage includes a heating section defining a flow passage of a heat transfer media, for suppling thermal energy to the endothermic steam reforming reaction by means of a controlled mass flow of the heat transfer media.

In a further advantageous embodiment the methanation reactor stage includes a cooling section defining a flow passage of the heat transfer media, for dissipating thermal energy generated in the exothermic methanation reaction by means of a controlled mass flow of the heat transfer media.

According to an aspect of the invention, a piping is arranged between the heating section of the steam reformer stage and the cooling section of the methanation reactor stage for exchanging thermal energy by means of a controlled mass flow of the heat transfer media.

According to an alternative embodiment of the invention, the steam reformer stage comprises a direct inlet for suppling fresh air.

According to an aspect of the invention the high-temperature fuel cell system provides an anode recirculation recirculation for recirculating anode gas from the fuel cell stack to the fuel reformer device.

In an advantageous embodiment the high-temperature fuel cell system provides a heat exchanger arranged in thermal contact with the fuel cell stack and defining a flow passage of the heat transfer media for dissipation of thermal energy generated in exothermic power generation of the solid oxide fuel cells.

In a further advantageous embodiment the high-temperature fuel cell system provides a heat exchanger arranged in thermal contact with the fuel mix preparation section and defining a flow passage of the heat transfer media for supply of thermal energy for steam generation.

According to an aspect of the invention the high-temperature fuel cell system provides a system heat distribution system including piping, valve means and a pump for exchanging thermal energy in the high-temperature fuel cell system by means of controlled mass flow of the heat transfer media between at least the heat exchangers.

In a further advantageous aspect hereto, the heat distribution system further comprises piping, valve means and/or a pump for exchanging thermal energy with the heating section and/or the cooling section.

In a more advantageous aspect hereto, the heat distribution system further comprises temperature sensors and a control unit connected to the valve means and the at least one pump for independently controlling temperatures at the heating section and at the cooling section by means controlled mass flow of the heat transfer media.

According to a preferred aspect of the invention, one of the temperature sensors is arranged in the steam reformer stage, and the control unit is configured to control a temperature of the low temperature zone below a maximum temperature of 300 °C by means of setting a mass flow of the heat transfer media passing the heating section based on a feedback of said temperature sensor.

According to a preferred aspect of the invention the raw fuel is methanol.

Further objectives, advantages, features and applications of the present invention arise from the following description of the exemplary embodiments with reference to the drawings. In the drawing:
- Fig. 1: shows a schematic block diagram of a fuel reformer device embedded in a high-temperature fuel cell system according to a first embodiment of the present invention;
- Fig. 2: shows a schematic block diagram of a fuel reformer device embedded in a high-temperature fuel cell system according to a second embodiment of the present invention;
- Fig. 3: shows a schematic block diagram of a fuel reformer device embedded in a high-temperature fuel cell system according to a third embodiment of the present invention;
- Fig. 4: shows a schematic block diagram of a fuel reformer device embedded in a high-temperature fuel cell system according to a modification of the first embodiment of the present invention;
- Fig. 5: shows a schematic block diagram of a fuel reformer device embedded in a high-temperature fuel cell system according to a modification of the second embodiment of the present invention.

### Detailed description of the Invention

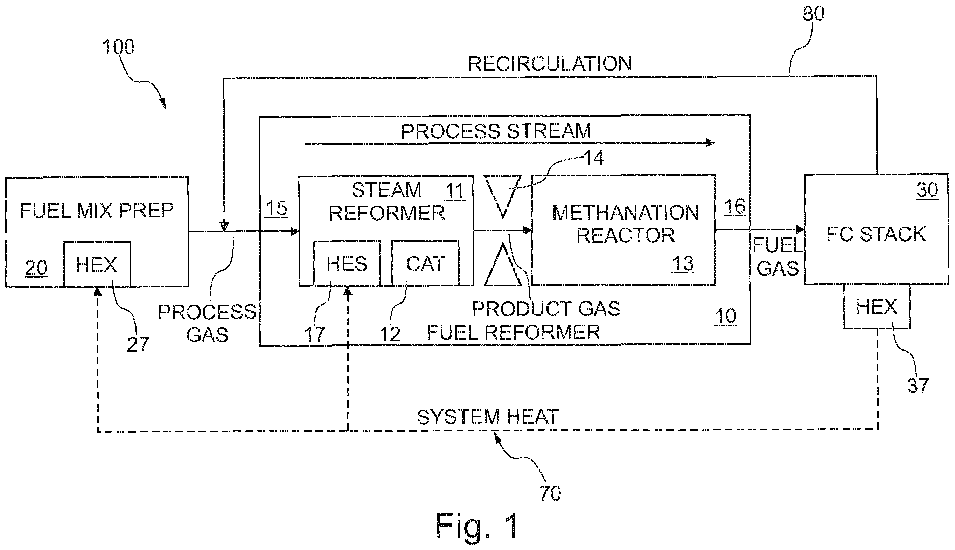

In fig. 1 a high-temperature fuel cell system 100 is basically represented by the system components of a fuel cell stack 30 of the SOFC type, a fuel reformer device 10 for reforming a supplied fresh process gas and a recirculated anode off-gas into a fuel gas for supply of an anode section of the fuel cell stack 30, as well as a fuel mix preparation section 20 for preparation of the process gas, as described later.

In addition, but not depicted, the high-temperature fuel cell system 100 includes an air supply for a cathode section of the fuel cell stack 30, and an indicated heat distribution system 70 including features of a balance of plant engineering, especially a circulation of a fluid heat transfer media for exchanging thermal energy between system components controlled by valves, pumps and the like. An anode recirculation line 80 collects the anode off-gas and refeeds the same into the process stream between the fuel mix preparation section 20 and the fuel reformer device 10, more particular into the process prepared by the fuel mix preparation section 20 before entering the fuel reformer device 10.

The fuel mix preparation section 20 is connected to a raw fuel supply of liquid methanol (not depicted) and to a water supply (not depicted). A heat exchanger 27 placed in the fuel mix preparation section 20 receives thermal energy in the form of system heat from the heat distribution system 70 for steam generation and for evaporation of the liquid methanol raw fuel before mixing both fluids in a mixing chamber to form the process gas, or at least the fresh part of the process gas before being diluted with a recycled part of the process gas in the form of the anode off-gas fed by the anode recirculation line 80.

The process gas enters the fuel reformer device 10 through a reformer inlet 15 into a steam reformer stage 11 defining a circumferentially enclosed reaction space along the direction of the process stream and being radially partly contained at a downstream end of the stage by a radially inwardly protruding barrier of a separating structure 14 of a casing of the fuel reformer device 10. A heating section 17 and a steam reaction catalyst 12 are arranged within the space formed by the steam reformer stage 11, wherein the steam reaction catalyst 12 is downstream to the heating section 17.

The separating structure 14 divides the steam reformer stage 11 and a methanation reactor stage 13 of the fuel reformer device 10 into two stages, while forcing the steam reforming reaction and the methanation reaction to occur in different local spaces along the process stream by means of a barrier of the casing radially inwardly protruding and confining the process stream between the larger flow cross-sections of inner spaces of the stages. Construction-wise this separation structure can be realized by a pipe having a reduces cross-section arranged between two inner chambers of the fuel reformer device, or in a more streamlined design a smooth shaped necking in the flow cross-section of process stream. The reduced flow cross-section leads to a local jet-effect of higher central flow velocity and effects a pressure barrier for preventing a backflow of hot gases from the methanation reactor stage reaching to the steam reaction catalyst 12 in an upstream direction.

The heating section 17 receives thermal energy from the heat distribution system 70 for radiating thermal energy for initiating and continuously supporting a controlled process of an endothermic steam reforming reaction of the process gas. During the process of reforming reaction a product gas is formed having a high content of hydrogen H₂ and carbon oxides CO, CO₂ as a product of the reaction. The steam reaction catalyst 12 supports a separation from hydrocarbons and an avoidance of spontaneous recombination of hydrogen with the hydrocarbons of the raw fuel in the reforming reaction. The catalyst material of the steam reaction catalyst 12 is a copper-based alloy.

A preferred catalyst material contains a mixture of copper oxide CuO, zinc oxide ZnO and aluminium oxide AL₂O₃. In a preferred ratio, the catalyst material contains more copper oxide CuO than zinc oxide ZnO, more preferably a content of approximately a double of weight % of copper oxide CuO to zinc oxide ZnO.

In particular, a low cost catalyst material suitable for the application in terms of the invention and being commercially available is distributed by the company C&CS with the trademark "ReforMax^{®} M (G-66 MR)". This product comprises a nominal content of 60 weight % of CuO, a nominal content of 30 weight % of zinc oxide ZnO, and a nominal content of 10 weight % of aluminium oxide AL₂O₃. This preferred ratio might tolerate variations in +/- 5 weight % among said three constituents. Said catalyst material is applicable in terms of the invention within a temperature range of approximately 250°C to 300 °C.

Following downstream to the radially inward protruding barrier of the separating casing structure 14, the process stream enters into the methanation reactor stage 13 of the fuel reformer device 10. The product gas generated by the processes of the steam reforming reaction and catalysation is superheated in the methanation reactor stage 13 by burning of residual hydrocarbons during the exothermal methanation reaction for forming methane from the hydrogen and carbon oxides. As a result, a final temperature of a fuel gas generated by all processes of the fuel reformer device 10 is raised up into a SOFC operation temperature range before entering the anode section of fuel cell stack 30. The methanation reactor stage 13 also defines a circumferentially enclosed reaction space that is radially limited to a downstream end by a reformer outlet 16 forming an exit for the fuel gas.

The fuel cell stack 30 generates electric power in a known manner under electrochemical reaction of the hydrogen contained in the fed fuel gas and air oxygen supplied to the cathode section of the fuel cell stack 30. A heat exchanger is arranged in thermal contact with the fuel cell stack 30, particularly in form or in thermal exchange with a dedicated cooling circuit in the fuel cell stack 30 and dissipates the collected thermal energy in the form of system heat into the heat distribution system 70 by means of a heat exchanger via a heat transfer media.

The heat distribution system 70 includes known control and propelling means like valves, bypasses, pumps, temperature sensors and a control unit. In this way, the control unit is capable of individually controlling, by a variable circulation flow of heat transfer media from the heat distribution system 70 to the heating section 17, a supply of thermal energy to the steam reforming reaction, thereby indirectly influencing a local temperature zone of occurrence of the steam reforming reaction, as well as a local temperature at the steam reaction catalyst 12.

A temperature control is implemented based on the premise to keep said local temperature below 300 °C for preventing deterioration of the copper in the catalyst material. Another factor of influencing temperature for preventing an exceeding of said local temperature at the catalyst material is based on a regulated mass flow of the overall process stream or of individual parts of the process gas introduced upstream to the fuel reformer device 10 by flow regulating means.

The concept of the first embodiment of the fuel cell system 100 in Fig. 1 is designed for performance of an adiabatic steam reforming and methanation reaction.

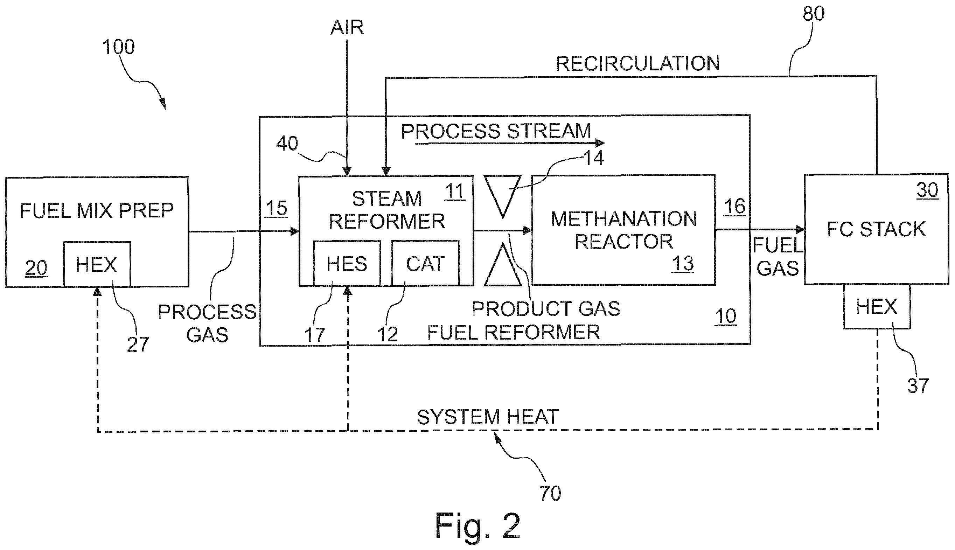

Compared hereto, Fig. 2 illustrates a second embodiment of the fuel cell system 100 designed to perform an allothermal steam reforming and methanation reaction. To this end, the fuel cell system 100 differs in the number and types of inlets entering the inner space of the steam reformer stage 13. The recirculation line 70 supplies the anode off-gas not upstream but directly into the steam reformer stage 13. Furthermore a direct air supply 40 is provided for supply of fresh air oxygen to be introduced directly into the steam reformer stage 13.

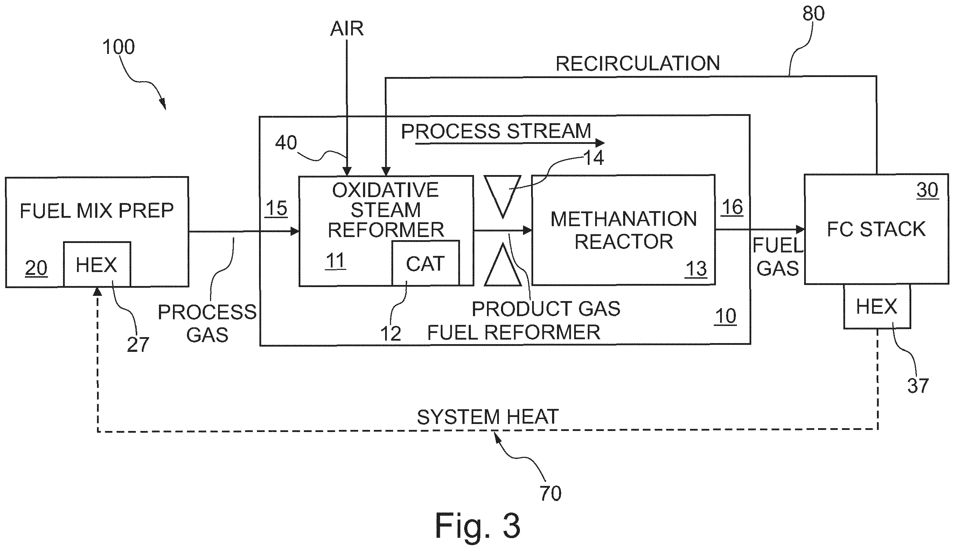

As another alternative concept, a third embodiment of the fuel cell system 100 shown in Fig. 3 is designed to perform an autothermal steam reforming and methanation reaction. The system structure is basically the same as in the second embodiment. However, while promoting a process of oxidative steam reforming supported by the direct air supply 40, the component of heating section 17 and a corresponding supply of thermal energy to the steam reformer stage 11 is omitted.

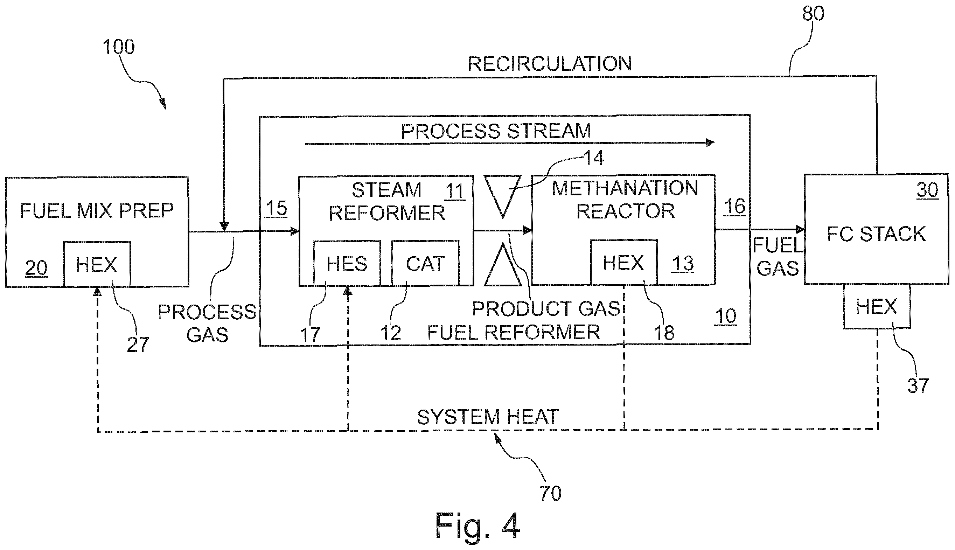

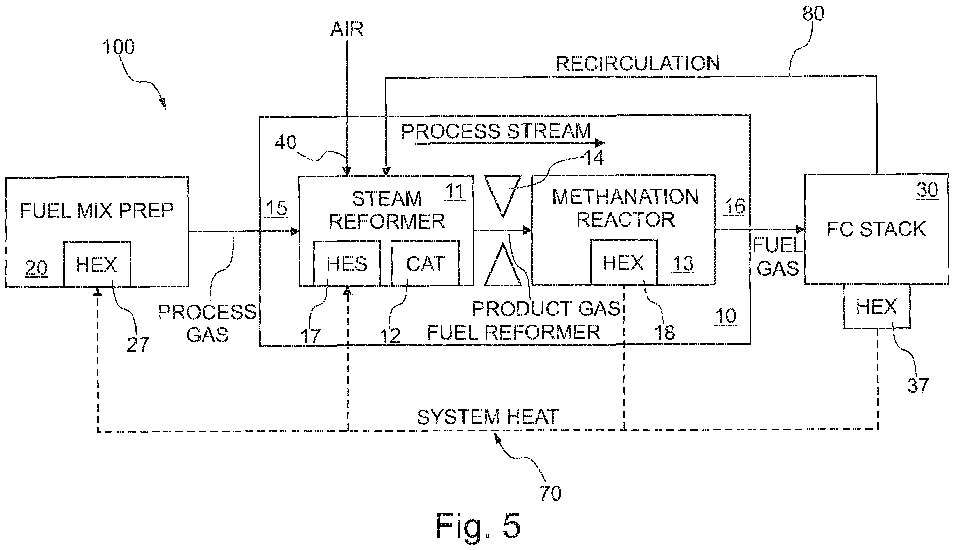

Figures 4 and 5 show an elaborated modification to the first and second embodiment of the fuel cell system 100. Such modification provides a cooling section 18 arranged in the inner space of the methanation reactor stage 13 for extracting thermal energy and controlling a stable process of the exothermal methanation reaction. The cooling section 18 helps particularly in purpose of setting a temperature of exiting product gas to an operation temperature of a SOFC on the one side, while avoiding a superheating or thermal runaway of methanation reaction on the other side. The cooling section 18 dissipates the collected thermal energy in the form of system heat into the heat distribution system 70 by means of a heat exchanger via a heat transfer media.

### List of reference characters

- 10: fuel reformer device
- 11: steam reformer stage
- 12: steam reforming catalyst
- 13: methanation reactor stage
- 14: separated two-stage structure
- 15: reformer inlet
- 16: reformer outlet
- 17: heating section
- 18: cooling section
- 20: fuel mix preparation section
- 27: heat exchanger
- 30: fuel cell stack
- 37: heat exchanger
- 40: air supply
- 70: heat distribution system
- 80: anode recirculation line
- 100: high-temperature fuel cell system

## Claims

1. A fuel reformer device (10) for reforming a raw fuel to a reformate fuel gas to be fed into a high-temperature fuel cell (30), comprising:
a reformer inlet (15) and a reformer outlet (16) for entrance and exit of a process stream, starting as a mixed process gas of steam and raw fuel prepared upstream to the fuel reformer device (10);
a steam reforming space in which an endothermic steam reforming reaction of the process gas occurs, for generating a product gas containing carbon monoxide (CO) and hydrogen (H₂);
a steam reforming catalyst (12), for separating hydrogen (H₂) from the product gas; and
a methanation reacting space in which an exothermic methanation reaction of the product gas occurs, for generating a fuel gas having an enriched concentration of methane (CH₄);
**characterized in that**,
the fuel reformer device (10) comprises a separated two-stage structure (14) defining a steam reformer stage (11) enclosing the steam reforming space and the steam reforming catalyst (12), as well as defining a methanation reactor stage (13) enclosing the methanation reacting space, for thermal delimiting, along the process stream, an upstream low temperature zone accommodating the steam reforming catalyst (12) against a downstream high temperature zone of the exothermic methanation reaction; and wherein
a catalyst material of the steam reforming catalyst (12) contains copper.

2. The fuel reformer device (10) according to claim 1, wherein copper represents the main part of the catalyst material of the steam reforming catalyst (12).

3. The fuel reformer device (10) according to claim 1 or 2, wherein the separated two-stage structure (14) defines a distance along the process stream between the steam reformer stage (11) and the methanation reactor stage (13), for thermal delimitation by means of a thermally isolating distance.

4. The fuel reformer device (10) according to any preceding claim, wherein the separated two-stage structure (14) defines a confinement in a flow cross-section of the process stream, for thermal delimitation by means of a barrier for preventing backflow from the downstream high temperature zone in the methanation reactor stage (13) to the upstream low temperature zone in the steam reformer stage (11).

5. The fuel reformer device (10) according to any preceding claim, wherein the steam reforming catalyst is formed as a membrane for supporting separation of the hydrogen (H₂) in the product gas.

6. The fuel reformer device (10) according to any preceding claim, wherein the steam reformer stage (11) includes a heating section (17) defining a flow passage of a heat transfer media, for suppling thermal energy to the endothermic steam reforming reaction by means of a controlled mass flow of the heat transfer media.

7. The fuel reformer device (10) according to any preceding claim, wherein the methanation reactor stage (13) includes a cooling section (18) defining a flow passage of the heat transfer media, for dissipating thermal energy generated in the exothermic methanation reaction by means of a controlled mass flow of the heat transfer media.

8. The fuel reformer device (10) according to claims 6 and 7, wherein a piping is arranged between the heating section (17) of the steam reformer stage (11) and the cooling section (18) of the methanation reactor stage (13) for exchanging thermal energy by means of a controlled mass flow of the heat transfer media.

9. The fuel reformer device (10) according to any preceding claim, wherein the steam reformer stage (11) comprises an inlet for suppling fresh air (20).

10. A high-temperature fuel cell system (100) including the fuel reformer device (10) according to any of the preceding claims, further comprising a fuel mix preparation section (20) for preparation of the process gas by mixing and heating the raw fuel and steam, and at least one fuel cell stack (30) of solid oxide fuel cells (SOFC) being supplied by the fuel gas exiting the fuel reformer device (10).

11. The high-temperature fuel cell system (100) according to claim 10, further comprising an anode recirculation recirculation (80) for recirculating anode gas from the fuel cell stack (30) to the fuel reformer device (10).

12. The high-temperature fuel cell system (100) according to claim 10 or 11, further comprising a heat distribution system (70) including piping, valve means and a pump for exchanging thermal energy in the high-temperature fuel cell system (100) by means of controlled mass flow of the heat transfer media between at least two of: a heat exchanger (37) arranged in thermal contact with the fuel cell stack (30) for dissipation of thermal energy generated in exothermic power generation of the solid oxide fuel cells, a heat exchanger (27) arranged in thermal contact with the fuel mix preparation section (20) for supply of thermal energy to steam generation, the heating section (17) and/or the cooling section (18).

13. The high-temperature fuel cell system (100) according to claim 12, wherein a temperature sensors is arranged in the steam reformer stage (11), and wherein a control unit is configured to control a temperature of the low temperature zone below a maximum temperature of 300 °C by means of setting a mass flow of the heat transfer media of the heat distribution system (70) passing the heating section (17) based on a feedback of said temperature sensor.

14. Method for reforming a raw fuel to a reformate fuel gas to be fed into a high temperature fuel cell (30), preferably by means of the fuel reformer device of any of claims 1 to 9 or the fuel cell system of any of claims 10 to 13, comprising the steps of:
preparing a mixed process gas of steam and raw fuel;
performing an endothermic steam reforming reaction of the process gas by supplying thermal energy, for generating a product gas having an enriched concentration of hydrogen (H₂); and
performing an exothermic methanation reaction of the product gas, for generating a fuel gas having an enriched concentration of methane (CH₄);
**characterized by** the steps of,
exposing a steam reforming catalyst (12) containing copper in or downstream to a space of occurrence of the steam reforming reaction, under thermal delimitation to a space of occurrence of the exothermic methanation reaction; and
controlling the supply of thermal energy in support of the endothermic steam reforming reaction depending on a local temperature at the steam reforming catalyst (12), in particular, further depending on a maximum of said local temperature of 300 °C.

15. The method according to claim 14, wherein the raw fuel is liquid methanol.
